# EUROPÄISCHE PATENTSCHRIFT

(11) **EP 0 937 108 B1**
(45) Veröffentlichungstag und Bekanntmachung des Hinweises auf die Patenterteilung: **06.06.2001**
(21) Anmeldenummer: 97948822.8
(22) Anmeldetag: 28.10.1997
(51) Int. Cl.: C08F 210/02, C08L 23/08, C08L 23/36, C08F 8/32, C10M 149/06, C10M 157/04, C10L 1/18, C10L 1/22, C10L 1/14

(54) **CO- UND TERPOLYMERE AUF BASIS VON ALPHA,BETA-UNGESÄTTIGTEN VERBINDUNGEN UND ALPHA,BETA-UNGESÄTTIGTEN DICARBONSÄUREANHYDRIDEN**
CO- AND TERPOLYMERS BASED ON ALPHA,BETA-UNSATURATED COMPOUNDS AND ALPHA,BETA-UNSATURATED DICARBOXYLIC ACID ANHYDRIDES
COPOLYMERES ET TERPOLYMERES A BASE DE COMPOSES ALPHA,BETA-INSATURES ET D'ANHYDRIDES D'ACIDE DICARBOXYLIQUE ALPHA,BETA-INSATURES

(30) Priorität: 06.11.1996 DE 19645603
(43) Veröffentlichungstag der Anmeldung: 25.08.1999
(73) Patentinhaber: Clariant GmbH, 65929 Frankfurt am Main (DE)
(72) Erfinder: KRULL, Matthias, D-46147 Obernhausen (DE); NAGEL, Waltraud, D-46147 Oberhausen (DE); WILDFANG, Raimund, D-46147 Oberhausen (DE)
(86) Internationale Anmeldenummer: EP9705946
(87) Internationale Veröffentlichungsnummer: WO9820056

(56) Entgegenhaltungen:
- EP-A- 0 154 177
- EP-A- 0 181 408
- EP-A- 0 363 870
- EP-A- 0 606 055
- FR-A- 2 649 709
- JP-A- 59 126 496

## Beschreibung

Die Erfindung betrifft Co- und Terpolymere auf Basis von α,β-ungesättigten Verbindungen und α,β-ungesättigten Dicarbonsäureanhydriden, verschiedene Verfahren zu ihrer Herstellung sowie ihre Verwendung als Fließverbesserer in Mineralölen und Mineralöldestillaten.

Rohöle und durch Destillation von Rohölen gewonnene Mitteldestillate wie Gasöl, Dieselöl oder Heizöl, enthalten je nach Herkunft der Rohöle unterschiedliche Mengen an n-Paraffinen, die bei Erniedrigung der Temperatur als plättchenförmige Kristalle auskristallisieren und teilweise unter Einschluß von Öl agglomerieren. Dadurch kommt es zu einer Verschlechterung der Fließeigenschaften dieser Öle bzw. Destillate, wodurch beispielsweise bei Gewinnung, Transport, Lagerung und/oder Einsatz der Mineralöle und Mineralöldestillate Störungen auftreten können. Bei Mineralölen kann dieses Kristallisationsphänomen beim Transport durch Rohrleitungen vor allem im Winter zu Ablagerungen an den Rohrwänden, in Einzelfällen, z.B. bei Stillstand einer Pipeline, sogar zu deren völliger Verstopfung führen. Auch bei der Lagerung und Weiterverarbeitung der Mineralöle kann die Ausfällung von Paraffinen Schwierigkeiten verursachen. So kann es im Winter unter Umständen erforderlich sein, die Mineralöle in beheizten Tanks zu lagern. Bei Mineralöldestillaten können als Folge der Kristallisation Verstopfungen der Filter in Dieselmotoren und Feuerungsanlagen auftreten, wodurch eine sichere Dosierung der Brennstoffe verhindert wird und gegebenenfalls eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (sogenannte Fließverbesserer oder Paraffin-Inhibitoren) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl von kleineren Paraffinkristallen mit veränderter Kristallform resultiert. Ein Teil der Wirkung der Additive wird auch durch eine Dispergierung der Paraffinkristalle erklärt. Die modifizierten Paraffinkristalle neigen weniger zur Agglomeration, so daß sich die mit diesen Additiven versetzten Öle noch bei Temperaturen pumpen bzw. verarbeiten lassen, die oft mehr als 20° tiefer liegen als bei nichtadditivierten Ölen. Die paraffininhibierende Wirkung der Fließverbesserer ist oftmals jedoch nicht ausreichend, so daß es zur Sedimentation und somit zur Bildung einer paraffinreichen Schicht am Boden von Lagerbehältern kommt. Um dies zu verhindern, werden den Ölen Paraffindispergatoren zugesetzt.

Typische Fließverbesserer für Rohöle und Mitteldestillate sind Copolymerisate des Ethylens mit Carbonsäureestern des Vinylalkohols.

Es sind jedoch auch Copolymere auf der Basis von α,β-ungesättigten Verbindungen und Maleinsäureanhydrid für den Einsatz als Fließverbesserer bekannt.

In der EP-A-0 154 177 werden Umsetzungsprodukte von alternierenden Copolymeren auf der Basis von α,β-ungesättigten Verbindungen und Maleinsäureanhydrid mit primären Monoalkylaminen und/oder aliphatischen Alkoholen beschrieben. Diese Copolymeren sind als Paraffininhibitoren für paraffinhaltige Erdölprodukte, beispielsweise Rohöle und Destillationsrückstände der Erdölverarbeitung geeignet.

Aus der US-A-2,615,845 ist ebenfalls die Umsetzung von ölunlöslichen alternierenden Copolymeren aus α,β-ungesättigten Verbindungen, wie Ethylen, und Maleinsäure sowie ihren Derivaten mit Alkoholen oder Aminen bekannt. Die Umsetzungsprodukte werden als Schmierstoffadditive eingesetzt.

Die EP-A-0 320 766 beschreibt Mischungen aus Ethylen/Vinylacetat-Copolymeren und Copolymeren mit 10 bis 90 Gew.-% C₆-C₂₄-Olefinen und 10 bis 90 Gew.-% N-C₆-C22-Alkylmaleinsäureimid. Diese Polymermischungen werden als Fließverbesserer für Mineralöldestillate mit hohem Siedeende eingesetzt.

Aus der US-A-3,506,625 sind öllösliche Metallsalze von teilweise imidierten, alternierenden Copolymeren aus Maleinsäureanhydrid und einer Monovinylverbindung für den Einsatz als Fließverbesserer bekannt.

Aus der DE-OS 2 024 131 ist die Umsetzung von statistischen Copolymeren aus Ethylen und Maleinsäureanhydrid mit primären oder sekundären Polyaminen bekannt. Die Umsetzung ermöglicht eine teilweise oder vollständige Vernetzung der Copolymere, wird bevorzugt zur Härtung von Formteilen oder mit den Copolymeren hergestellten Überzügen durchgeführt und liefert Produkte mit guten mechanischen Eigenschaften und hoher Wärmeformbeständigkeit, die z.B. als Isolierung für Kabel, als Verpackungsmaterial für heiße Produkte oder als hitzebeständige Rohre, nicht aber als Paraffininhibitoren eingesetzt werden.

Aus der DE-OS 2 214 331 ist ein Verfahren zur Herstellung von Klebstoffen mit verbesserten Adhäsionseigenschaften bekannt, bei dem ein statistisches Copolymer aus Ethylen und Maleinsäureanhydrid mit Ammoniak, primären oder sekundären Aminen behandelt wird. Die Säuregruppen der im Copolymer einpolymerisierten Maleinsäureanhydrideinheiten werden unter den gewählten Reaktionsbedingungen zu Amidgruppen und Ammoniumsalzen, nicht aber zu Imidgruppen umgesetzt.

Die Wirksamkeit der bekannten Zusatzstoffe zur Verbesserung der Eigenschaften von Mineralölfraktionen ist u.a. abhängig von der Herkunft des Mineralöls, aus dem sie gewonnen wurden und damit insbesondere von dessen Zusammensetzung. Additive, die zur Einstellung bestimmter Eigenschaftswerte von Fraktionen eines Rohöls hervorragend geeignet sind, können daher bei Destillaten von Rohölen anderen Ursprungs zu völlig unbefriedigenden Ergebnissen führen.

Inzwischen stehen Additive zur Verfügung, die einen breiten Anwendungsbereich haben, d.h. die Fließeigenschaften von Mineralölen und Mineralölfraktionen unterschiedlicher Herkunft bei tiefen Temperaturen deutlich verbessern.
Dennoch gibt es Fälle, in denen sie sich als wenig oder gar nicht brauchbar erweisen. Die Ursachen hierfür sind vielfältig; die Erschließung bisher nicht genutzter Rohstoffe, die geänderte Verarbeitung der Primärprodukte und neue Anforderungen spezieller Märkte seien als Beispiele genannt.

Insbesondere Dieselkraftstoffe, die sich durch eine verminderte Umweltbelastung bei der Verbrennung auszeichnen und durch einen sehr geringen Schwefelgehalt von weniger als 500 ppm und insbesondere weniger als 100 ppm sowie einen niedrigen Aromatengehalt charakterisiert sind, lassen sich mit herkömmlichen Fließverbesserern nicht oder nur ungenügend additivieren. Probleme bereiten dabei vor allem die für den Einsatz unter arktischen Bedingungen hergestellten Winterqualitäten von Dieselkraftstoffen mit ihren extremen Kälteeigenschaften, wie z.B. einem Cloud Point kleiner -20°C und insbesondere kleiner -30°C, sehr engen Destillationsschnitten mit Siedebereichen von 20 bis 90 Vol.-% kleiner 100°C, insbesondere kleiner 80°C und teilweise auch kleiner 60°C, und einem auf ca. 350°C und insbesondere auf ca. 320°C begrenzten Siedeende. Die Kälteeigenschaften solcher Destillate können derzeit nur über die Zugabe von leichter siedenden, paraffinarmen Komponenten, wie z.B. Kerosin, zufriedenstellend verbessert werden.

Es bestand daher die Aufgabe, neue Additive zur Verbesserung der Fließfähigkeit solcher Erdölarten oder Erdölfraktionen zu entwickeln, bei denen die Additive des Standes der Technik nur unbefriedigend wirken.

Gegenstand der Erfindung sind öllösliche, statistische Co- und Terpolymere auf Basis von α,β-ungesättigten Verbindungen und α,β-ungesättigten Dicarbonsäureanhydriden, die dadurch gekennzeichnet sind, daß sie 60 - 99 mol-% an bivalenten Struktureinheiten A und gegebenenfalls B enthalten

(A) -CH₂-CH₂-

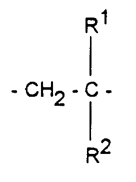

wobei der Anteil der Struktureinheiten A an der Summe der Struktureinheiten A und B mindestens 70 mol-% beträgt,
wobei R¹ und R² verschieden sind und R¹ Wasserstoff oder Methyl und R² Wasserstoff, eine Gruppe COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, bedeuten 1 - 40 mol-% an bivalenten Struktureinheiten C und gegebenenfalls D sowie E enthalten, 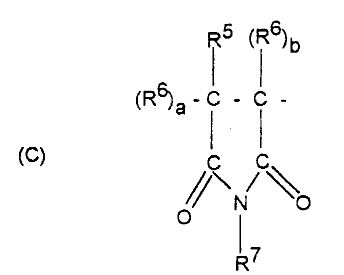 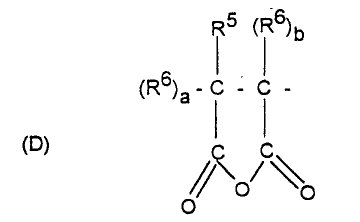 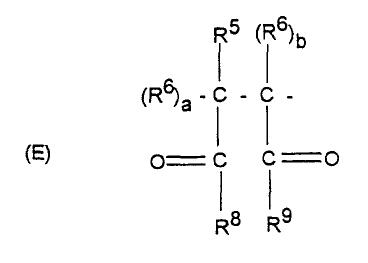 wobei der Anteil der bivalenten Struktureinheiten C größer als 80 mol-%, bezogen auf die Summe der Struktureinheiten C, D und E ist, R⁵ und R⁶ unabhängig voneinander Wasserstoff oder Methyl bedeuten, a, b gleich 0 oder 1 und a + b gleich 1 ist, R⁷ gleich oder verschieden ist und eine C₆-C₂₄-Alkylgruppe, eine Gruppe der allgemeinen Formel F 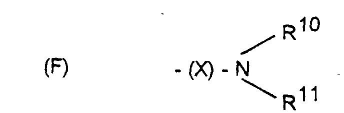 oder eine Gruppe der allgemeinen Formel G darstellt 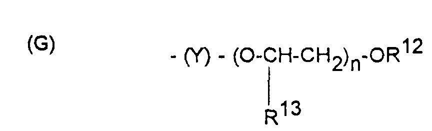 worin X eine C₂-C₄-Alkylengruppe, R¹⁰ Methyl oder eine C₆-C₂₂-Alkylgruppe und R¹¹ eine C₆-C₂₄-Alkylgruppe bedeutet, Y eine C₂-C₄-Alkylengruppe, n eine Zahl zwischen 1 und 100, R¹² C₁-C₃₀-Alkyl, C₅-C₁₂-Cycloalkyl oder C₆-C₃₀-Aryl und R¹³ Wasserstoff, C₁-C₄-Alkyl, bevorzugt Methyl, darstellt und R⁸ und R⁹ gleich oder verschieden sind und einen Rest -NHR⁷ oder OR¹⁴ darstellen, wobei R¹⁴ Wasserstoff oder ein Ammoniumkation der Formel H₃N⊕R⁷ ist, wobei für den Fall, daß die Struktureinheiten C und E verschiedene Reste R⁷ enthalten, der Anteil der Reste R⁷ mit einer Bedeutung gemäß der Formel G max. 10 mol-%, bezogen auf die Gesamtzahl der Reste R⁷ beträgt und die Schmelzviskosität der Co- oder Terpolymere bei 140°C (V₁₄₀) 10 bis 10.000 mPas beträgt.

Erfindungsgemäß sind unter Copolymeren auf Basis von α,β-ungesättigten Verbindungen und α,β-ungesättigten Dicarbonsäureanhydriden solche Polymere zu verstehen, die aus Struktureinheiten A, welche sich vom Ethylen ableiten, sowie Struktureinheiten C und gegebenenfalls D sowie E bestehen. Liegen dagegen im Polymer neben den Struktureinheiten A und den Struktureinheiten C sowie gegebenenfalls D und E auch noch Struktureinheiten B vor, so wird erfindungsgemäß von einem Terpolymer gesprochen, und zwar unabhängig davon, ob ein oder mehrere verschiedene Typen von Struktureinheiten B vorhanden sind.

Die erfindungsgemäßen Co- bzw. Terpolymere enthalten 60 bis 99 mol-%, bevorzugt 70 bis 98 mol-%, insbesondere 80 bis 97,5 mol-% an bivalenten Struktureinheiten A und gegebenenfalls Struktureinheiten B sowie 1 bis 40 mol-%, bevorzugt 2 bis 30 mol-%, insbesondere 2,5 bis 20 mol-% an bivalenten Struktureinheiten C und gegebenenfalls D sowie E.

Der Anteil der Struktureinheiten A an der Summe der Struktureinheiten A und B beträgt mindestens 70 mol-%, bevorzugt mindestens 80 mol-% und insbesondere mindestens 90 mol-%. Der Anteil der Struktureinheiten C, bezogen auf die Summe der Struktureinheiten C, D und E, beträgt mindestens 80 mol-%, bevorzugt mindestens 85 mol-%, besonders bevorzugt mindestens 90 mol-% und insbesondere mindestens 93 mol-%.

Enthalten die Struktureinheiten C und E verschiedene Reste R⁷, so beträgt der Anteil der Reste R⁷ mit einer Bedeutung gemäß der Formel G maximal 10 mol-%, bevorzugt maximal 6 mol-% und insbesondere maximal 3 mol-%, bezogen auf die Gesamtzahl der Reste R⁷.

Neben den bivalenten Struktureinheiten A, B, C, D und E können die Co- und Terpolymere lediglich noch in an sich bekannter Weise die bei der Polymerisation durch Initiierung, Moderierung und Kettenabbruch entstandenen Endgruppen enthalten.

Im einzelnen leiten sich die bivalenten Struktureinheiten A und B von α,β-ungesättigten Verbindungen der Formel H 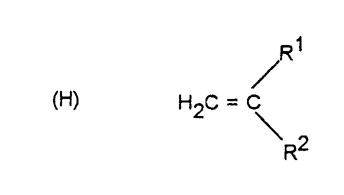 ab, wobei sich die Struktureinheiten A vom Ethylen ableiten (R¹ = R² = Wasserstoff) und in den Struktureinheiten B R¹ und R² verschieden sind und R¹ Wasserstoff oder Methyl und R² Wasserstoff, eine Gruppe -COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, darstellt. Insbesondere leiten sich die Struktureinheiten B von den α,β-ungesättigten Verbindungen Vinylacetat (R¹ = H, R² = OCOCH₃), Acrylsäuremethylester (R¹ = H, R² = -COOCH₃), Methacrylsäuremethylester (R¹ = CH₃, R² = -COOCH₃), Acrylsäureethylester (R¹ = H, R² = -COOC₂H₅) und Methacrylsäureethylester (R¹ = CH₃), R² = -COOC₂H₅) ab.

Die Struktureinheiten c, D und E leiten sich von α,β-ungesättigten Dicarbonsäureanhydriden der allgemeinen Formel J und/oder K 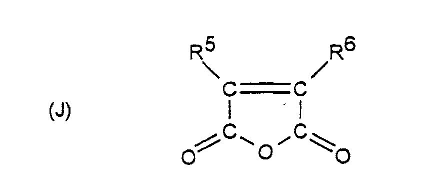 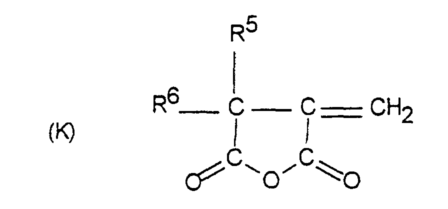 ab, wobei R⁵ und R⁶ unabhängig voneinander Wasserstoff oder Methyl bedeuten. Beispielsweise genannt seien Maleinsäureanhydrid, Itaconsäureanhydrid und Citraconsäureanhydrid; bevorzugt wird Maleinsäureanhydrid eingesetzt.

Die Struktureinheiten C enthalten die Imid-Gruppe -NR⁷ und die Struktureinheiten E die Amidgruppe -NHR⁷ sowie das Ammonium-Kation H₃N^{⊕}R⁷. Diese Gruppen leiten sich alle von primären Aminen der Formel L ab,

(L) NH₂R⁷

wobei R⁷ gleich oder verschieden ist und eine C₆-C₂₄-Alkylgruppe, eine Gruppe der allgemeinen Formel F 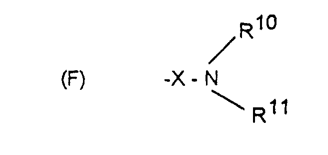 oder eine Gruppe der allgemeinen Formel G darstellt 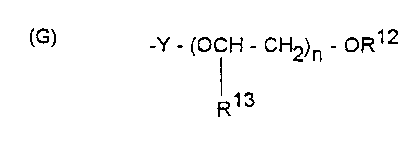 Als primäre Amine der Formel L seien beispielsweise die folgenden genannt: primäre Fettalkylamine mit C₆-C₂₄-Alkylresten wie Octylamin, Decylamin, Dodecylamin, Tetradecylamin, Hexadecylamin, Octadecylamin oder Mischungen primärer Fettalkylamine natürlichen Ursprungs wie Cocosfettaminen oder Talgfettaminen. Bevorzugt sind Cocosfettamin (Mischung aus hauptsächlich C₁₂-C₁₄-Aminen) und Talgfettaminen (Mischung aus hauptsächlich C₁₆ und C₁₈-Aminen).

Als primäre Amine der Formel L, bei denen R⁷ eine Gruppe der Formel F darstellt, sind ferner solche bevorzugt, bei denen X einen Propylenrest und R¹⁰ und/oder R¹¹ einen Lauryl-, Cocosfett- oder Talgfett-Rest darstellen.

Als primäre Amine der Formel L, bei denen R⁷ eine Gruppe der Formel G darstellt, sind beispielsweise aminierte Oxethylate niederer Alkohole, wie Methanol oder Butanol, zu nennen mit einem Verhältnis Ethylenoxid : Propylenoxid von 1 : 10 bis 10 : 1 und einem Molekulargewicht von bis zu 2000 g/mol. Solche aminierten Oxethylate werden in der DE 44 22 154 zur Umsetzung mit Polymeren, die Dicarbonsäureanhydrideinheiten enthalten, beschrieben.

Die erfindungsgemäßen Co- bzw. Terpolymere besitzen Eigenviskositätswerte K (gemessen nach Ubbelohde in 5 gew.-%iger Lösung in Toluol bei 25°C) von 10 bis 100, bevorzugt 10 bis 50.

Die Schmelzviskosität der Co- bzw. Terpolymere bei 140°C (V₁₄₀) liegt bei 10 - 10.000 mPas, bevorzugt bei 20 - 5.000 mPas.

Gegenstand der Erfindung ist ferner ein Verfahren zur Herstellung der erfindungsgemäßen Co- und Terpolymere auf Basis von α,β-ungesättigten Verbindungen und α,β-ungesättigten Dicarbonsäureanhydriden, das dadurch gekennzeichnet ist, daß man zunächst Ethylen und gegebenenfalls weitere Monomere der allgemeinen Formel H 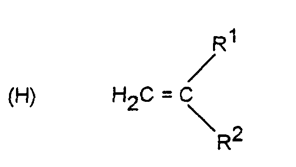 wobei R¹ und R² verschieden sind, R¹ Wasserstoff oder Methyl und R² Wasserstoff, eine Gruppe -COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, darstellen und Monomere der allgemeinen Formel J und/oder K, 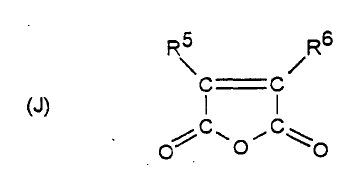 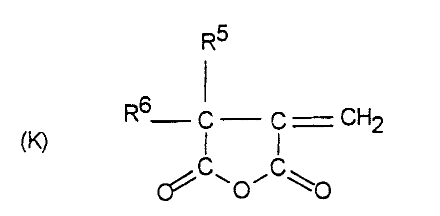 wobei R⁵ und R⁶ unabhängig voneinander Wasserstoff oder Methyl bedeuten, miteinander polymerisiert und das erhaltene Co- oder Terpolymerisat anschließend mit einem oder mehreren Aminen der Formel L umsetzt,

(L) NH₂R⁷

wobei R⁷ eine C₆-C₂₂-Alkylgruppe darstellt, einen Rest der Formel F 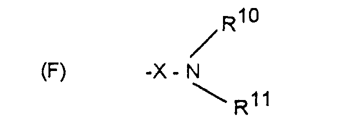 oder einen Rest der Formel G 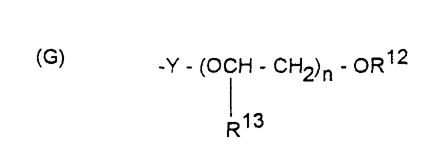 wobei X eine C₂-C₄-Alkylengruppe und R¹⁰ Methyl oder eine C₆-C₂₂-Alkylgruppe bedeutet, R¹¹ eine C₆-C₂₂-Alkylgruppe darstellt, Y eine C₂-C₄-Alkylengruppe, n eine Zahl zwischen 1 und 100, R¹² C₁-C₃₀-Alkyl, C₅-C₁₂-Cycloalkyl oder C₆-C₃₀-Aryl und R¹³ Wasserstoff, C₁-C₄-Alkyl, bevorzugt Methyl, bedeutet.

Werden Mischungen von Aminen der Formel L mit unterschiedlichen Bedeutungen für den Rest R⁷ eingesetzt, so ist es bevorzugt, die Amine mit Resten R⁷ gemäß der Formel G mit maximal 10 mol-%, bevorzugt maximal 6 mol-% und insbesondere mit maximal 3 mol-%, einzusetzen, bezogen auf die umzusetzenden Säureanhydridgruppen der einpolymerisierten α,β-ungesättigten Dicarbonsäureanhydride.

Die Polymerisation erfolgt in einer kontinuierlich oder diskontinuierlich, bevorzugt kontinuierlich durchgeführten Hochdruckpolymerisation. Die Polymerisationsbedingungen für die Herstellung statistischer Copolymere aus Ethylen und gegebenenfalls weiteren α,β-ungesättigten Monomeren sowie Maleinsäureanhydrid ist von Terteryan und Khrapov (Polymer Science U.S.S.R. 1983, Vol. 25, 2151 - 2160) ausführlich untersucht worden und auch aus FR 2 569 412, FR 2 569 411 und DD 108 757 bekannt.

Das Polymerisationsverfahren wird bei Temperaturen zwischen 100 und 350, bevorzugt 140 - 300°C und unter einem Druck von 50 und 400 MPa, bevorzugt 100 und 300 Mpa, durchgeführt. Zur Polymerisation setzt man als Initiatoren geeignete Radikalkettenstarter wie z.B. Hydroperoxide, Peroxide oder Azoverbindungen ein. Verwendet werden z.B. Dilaurylperoxid, Dibenzoylperoxid, t-Butylpivalat, t-Butylpermaleinat, t-Butylperbenzoat, Dicumylperoxid, t-Butylamylperoxid, Di-t-butylperoxid, Cumolhydroperoxid, t-Butylhydroperoxid, 2,2'-Azo-bis-(2-methylpropanonitril), 2,2'-Azo-bis-(2-methylbutyronitril) oder Mischungen davon. Im allgemeinen werden diese Initiatoren in Mengen von 0,1 - 20 Gew.-%, bevorzugt 0,2 bis 10 Gew.-%, bezogen auf die Monomeren, eingesetzt.

Maleinsäureanhydrid kann dabei dem Polymerisationsreaktor in geschmolzenem Zustand oder als Lösung in einem organischen inerten Lösungsmittel wie Ketonen, bevorzugt Methylethylketon, oder Estem, bevorzugt Essigsäuremethylester oder -ethylester, zugeführt werden. Es ist jedoch auch möglich, Maleinsäureanhydrid in einer α,β-ungesättigten Verbindung wie z.B. Methacrylsäuremethylester, Methacrylsäureethylester oder Vinylacetat gelöst zuzudosieren. In diesem Fall werden die als Lösungsmittel eingesetzten α,β-ungesättigten Verbindungen bei der Polymerisation als Monomere mit einpolymerisiert und führen zu Struktureinheiten der Formel B. Wird Maleinsäureanhydrid als Lösung eingesetzt, so ist darauf zu achten, daß die Sättigungsgrenze des Maleinsäureanhydrids in dem jeweiligen Lösungsmittel nicht überschritten wird.

Zur Co- bzw. Terpolymerisation werden 0,2 - 15 mol-%, bevorzugt 0,5 - 10 mol-% der α,β-ungesättigten Dicarbonsäureanhydride sowie 85 - 99,2 mol-%, bevorzugt 90 - 99,5 mol-%, der α,β-ungesättigten Verbindungen eingesetzt.

Die gewünschte Schmelzviskosität der Co- und Terpolymerisate wird bei gegebener Zusammensetzung des Monomerengemischs in einer dem Fachmann geläufigen Weise durch Variation der Reaktionsparameter Druck und Temperatur und gegebenenfalls durch Zusatz von Molekulargewichtsreglern eingestellt.

Zur Herstellung niedermolekularer Co- oder Terpolymere ist es oftmals zweckmäßig, in Gegenwart von an sich bekannten Molekulargewichtsreglern zu arbeiten. Geeignete Regler sind beispielsweise Wasserstoff, Alkane, bevorzugt Propan, Aldehyde, bevorzugt Propionaldehyd-, Ketone, bevorzugt Aceton oder Methylethylketon, sowie organische Mercaptoverbindungen wie 2-Mercaptoethanol, 2-Mercaptopropanol, Mercaptoessigsäure, Mercaptopropionsäure, tert-Butylmercaptan, n-Butylmercaptan, n-Octylmercaptan, n-Dodecylmercaptan und tert.-Dodecylmercaptan. Diese Regler werden in Abhängigkeit von der angestrebten Viskosität in Mengen von 0,1 bis 20 Gew.-% eingesetzt.

Ist das Molekulargewicht der Polymere für die Verwendung zu niedrig, so können dem Reaktionsgemisch bei der polymeranalogen Umsetzung zur nachträglichen Erhöhung des Molekulargewichts auch gewisse Mengen, d.h. bis zu 20 mol-%, bezogen auf die Säureanhydridgruppen der Struktureinheiten, die sich von dem α,β-ungesättigten Dicarbonsäureanhydrid ableiten, an Verbindungen mit 2 Aminogruppen, die jeweils mindestens ein acides Proton besitzen, zugesetzt werden. Geeignet sind z.B. Diamine der Formel M

(M) H₂N - (CH₂)ₓ - NH₂

wobei x eine ganze Zahl von 2 bis 8 ist, bevorzugt sind Ethylendiamin, Propylendiamin und Hexamethylendiamin. Geeignet sind ferner Poly(ether)diamine der Formel N 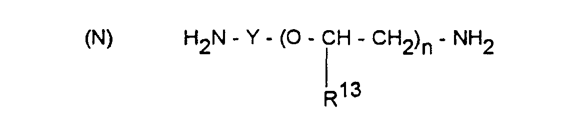 wobei Y eine C₂-C₄-Alkylengruppe, n eine Zahl zwischen 1 und 100 und R¹³ Wasserstoff oder C₁-C₄-Alkyl, bevorzugt Methyl, ist. Die zugesetzte Menge der genannten Diamine muß so gering sein, daß das Produkt öllöslich bleibt und nicht vernetzt.

Die Hochdruckpolymerisation wird in bekannten Hochdruckreaktoren, z.B. Autoklaven oder Rohrreaktoren, bevorzugt kontinuierlich durchgeführt. Besonders bewährt haben sich Rohrreaktoren. Lösungsmittel wie aliphatische Kohlenwasserstoffe oder Kohlenwasserstoffgemische, Benzol oder Toluol, können im Reaktionsgemisch enthalten sein. Nach einer bevorzugten Ausführungsform der Polymerisation wird das Gemisch aus den Monomeren, dem Initiator und, sofern eingesetzt, dem Moderator, einem Rohrreaktor über den Reaktoreingang sowie gegebenenfalls über einen oder mehrere Seitenäste zugeführt. Hierbei können die Monomerenströme, wie in der EP 0 271 738 B1 beschrieben, unterschiedlich zusammengesetzt sein.

Nach der Co- bzw. Terpolymerisation erfolgt die polymeranaloge Umsetzung des Co- bzw. Terpolymers mit einem oder mehreren Aminen der allgemeinen Formel L. Die Reaktionsbedingungen werden so gewählt, daß eine möglichst weitgehende Umsetzung der einpolymerisierten Säureanhydridgruppen zu Imidgruppen stattfindet, was zur Bildung von Struktureinheiten C führt. Der Anteil der Amidgruppen, der freien Säuregruppen sowie der Ammonium-Kationen, die zu Struktureinheiten E führen, sowie insbesondere der Anteil nichtumgesetzter Säureanhydrideinheiten, die in Form der Struktureinheiten D vorliegen, soll nur gering sein. Mit dem erfindungsgemäßen Verfahren gelingt es, die einpolymerisierten Anhydridgruppen der α,β-ungesättigten Dicarbonsäureanhydride zu mindestens 80 mol-%, bevorzugt zu mindestens 85 mol-%, besonders bevorzugt zu mindestens 90 mol-% und insbesondere zu mindestens 93 mol-% in Imidgruppen zu überführen. Die Umsetzung der Co- oder Terpolymeren erfolgt üblicherweise bei Temperaturen zwischen 30 und 250°C im Verlauf von 0,5 - 20 Stunden. Das Reaktionswasser wird bevorzugt mit Wasserschleppmitteln wie Toluol, Xylol oder höhersiedenden Kohlenwasserstoffen oder einem Inertgasstrom, wie z.B. Stickstoff, entfernt. Es können bekannte Veresterungskatalysatoren wie Toluolsulfonsäure, Methansulfonsäure oder hypophosphorige Säure zugesetzt werden. Das Amin wird in Mengen von 0,8 bis 1,2 mol, bevorzugt 0,9 bis 1,1 mol und besonders bevorzugt 1 moil/mol einpolymerisiertem Dicarbonsäureanhydrid eingesetzt. Die Säurezahl des lösungsmittelfreien Produkts ist kleiner als 20 mg KOH/g, bevorzugt kleiner als 10 mg KOH/g.

Ebenfalls Gegenstand der Erfindung ist ein weiteres Verfahren zur Herstellung der erfindungsgemäßen Co- und Terpolymere auf Basis von α,β-ungesättigten Verbindungen und α,β-ungesättigten Dicarbonsäureanhydriden, das dadurch gekennzeichnet ist, daß man zunächst Monomere der allgemeinen Formeln J und/oder K 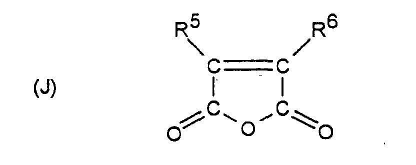 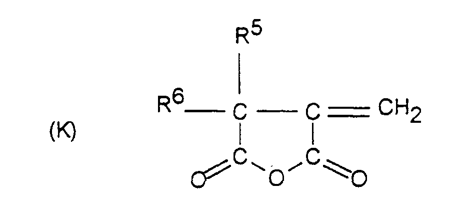 wobei R⁵ und R⁶ unabhängig voneinander Wasserstoff oder Methyl bedeuten, mit einem oder mehreren Aminen der Formel L

(L) NH₂R⁷

wobei R⁷ eine C₆-C₂₄-Alkylgruppe; einen Rest der Formel F 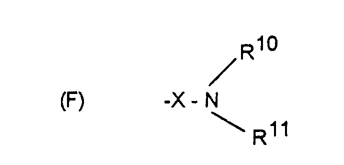 oder einen Rest der Formel G darstellt 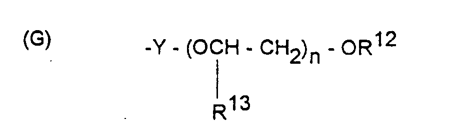 wobei X eine C₂-C₄-Alkylengruppe und R¹⁰ Methyl oder eine C₆-C₂₂-Alkylgruppe und R¹¹ eine C₆-C₂₂-Alkylgruppe bedeutet, Y eine C₂-C₄-Alkylengruppe, n eine Zahl zwischen 1 und 100, R¹² C₁-C₃₀-Alkyl, C₅-C₁₂-Cycloalkyl oder C₆-C₃₀-Aryl und R¹³ Wasserstoff, C₁-C₄-Alkyl, bevorzugt Methyl, bedeutet, umsetzt und das Umsetzungsprodukt anschließend mit Ethylen und gegebenenfalls weiteren Monomeren der allgemeinen Formel H 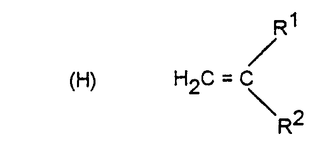 wobei R¹ und R² verschieden sind, R¹ Wasserstoff oder Methyl und R² Wasserstoff, eine Gruppe -COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, darstellen, polymerisiert.

Die Umsetzung der α,β-ungesättigten Dicarbonsäureanhydride mit einem oder mehreren Aminen der Formel L erfolgt in einer dem Fachmann geläufigen Weise, z.B. wie in der EP-A-0 320 766 beschrieben.

Werden Mischungen von Aminen der Formel L mit unterschiedlichen Bedeutungen für den Rest R⁷ eingesetzt, so ist es bevorzugt, die Amine mit Resten R⁷ gemäß der der Formel G mit maximal 10 mol-%, bevorzugt maximal 6 mol-% und und insbesondere mit maximal 3 mol-%, einzusetzen, bezogen auf die Säureanhydridgruppen der umzusetzenden α,β-ungesättigten Dicarbonsäureanhydride.

Das Reaktionsprodukt aus α,β-ungesättigten Dicarbonsäureanhydriden und einem oder mehreren Aminen der Formel L, welches zu mindestens 80 mol-%, bevorzugt zu mindestens 85 mol-%, besonders bevorzugt zu mindestens 90 mol-% und insbesondere zu mindestens 93 mol-% aus den entsprechenden α,β-ungesättigten Dicarbonsäureimiden besteht, wird insbesondere bei Imiden mit höherem Erweichungspunkt in geschmolzener Form oder als Lösung in einem Lösungsmittel in den Polymerisationsreaktor zudosiert. Hierbei können zum einen organische Lösungsmittel, wie Ester, bevorzugt Essigsäuremethylester oder -ethylester oder Ketone, bevorzugt Methylethylketon, verwendet werden, die sich bei der Polymerisation inert verhalten. Es können jedoch auch α,β-ungesättigte Verbindungen wie Vinylacetat, Methacrylsäuremethylester oder Methacrylsäureethylester als Lösungsmittel eingesetzt werden, die an der nachfolgenden Polymerisation beteiligt sind und entsprechend der bereits gegebenen erfindungsgemäßen Definition der Begriffe Co- und Terpolymere zu Terpolymeren führen.

Die Polymerisation des Umsetzungsprodukts aus α,β-ungesättigten Dicarbonsäureanhydriden und einem oder mehreren Aminen mit den α,β-ungesättigten Verbindungen erfolgt über ein bevorzugt kontinuierlich durchgeführtes Hochdruckverfahren. Die Reaktionsbedingungen dieser Hochdruckpolymerisation bezüglich Temperatur, Druck, Initiator, Monomerverhältnissen, Molekulargewichtsreglern, moiekulargewichtserhöhenden Substanzen sowie Hochdruckreaktortypen, entsprechen den Reaktionsbedingungen, die zuvor bereits im Rahmen des polymeranalogen Herstellungsverfahrens genannt wurden.

Bei den erfindungsgemäßen Co- und Terpolymeren handelt es sich um statistische Co- und Terpolymere, die als Fließverbesserer für paraffinhaltige Rohöle und insbesondere für Erdölprodukte, die paraffine Wachse, Asphaltene, Harze usw. enthalten, geeignet sind. Sie bewirken eine Verbesserung der Kaltfließeigenschaften, insbesondere der Filtrierbarkeit, der mit ihnen additivierten Öle unterhalb des Cloud Points. Weiterhin bewirken sie eine Paraffindispergierung, d.h. es wird eine Anreicherung von ausgefallenen Paraffinen, z.B. auf dem Tankboden verhindert.

Paraffinhaltige Erdölprodukte im Sinne der Erfindung sind beispielsweise Rohöle, Destillationsrückstände der Erdölverarbeitung oder andere paraffinhaltige Öle, bevorzugt Mitteldestillate (vergleichlich z.B. compositions and properties of petroleum, F. Ence Publishers, Stuttgart 1981, Seiten 1- 37). Paraffine können hierbei geradkettige oder verzweigte Alkane mit etwa 10 - 50 Kohlenstoffatomen sein.

Bevorzugt eignen sich die erfindungsgemäßen Co- und Terpolymere als Fließverbesserer für die vor allem in Skandinavien gebräuchlichen Dieselkraftstoffe, die sich durch eine verminderte Umweltbelastung bei der Verbrennung auszeichnen und durch einen sehr geringen Schwefelgehalt von weniger als 500 ppm und insbesondere weniger als 50 ppm sowie einen niedrigen Aromatengehalt charakterisiert sind. Besonders vorteilhaft lassen sich die Co- und Terpolymere zur Additivierung der für den Einsatz unter arktischen Bedingungen vorgesehenen Winterqualitäten von Dieselkraftstoffen einsetzen. Diese weisen extreme Kälteeigenschaften auf, wie z.B. einen Cloud Point von kleiner -20°C, insbesondere kleiner -30°C, sehr enge Destillationsschnitte mit Siedebereichen von 20 - 90 Vol.-% kleiner 100°C, insbesondere kleiner 80°C und teilweise sogar kleiner 60°C, sowie ein auf ca. 350°C, insbesondere 320°C begrenztes Siedeende.

Die erfindungsgemäßen Fließverbesserer werden dem paraffinhaltigen Rohöl oder Erdölprodukt im allgemeinen mit 10 - 10.000 ppm, bevorzugt 20 - 5.000 ppm, besonders bevorzugt 50 - 2.000 ppm zugesetzt. Die für ein bestimmtes paraffinhaltiges Öl optimale Anwendungskonzentration kann jeweils ermittelt werden, z.B. durch Bestimmung des Cold Filter Plugging Points (CFPP) gemäß EN 116.

Die erfindungsgemäßen Terpolymerisate werden Mineralölen oder Mineralöldestillaten in Form von Lösungen oder Dispersionen zugesetzt. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsol AB, ®Solvesso 150, ®Solvesso 200, ®Solvesso 250, ®Exxsol, ®ISOPAR- und Shellsol D-Typen. Durch die neuen polymeren Verbindungen in ihren rheologischen Eigenschaften verbesserte Mineralöle oder Mineralöldestillate enthalten 0,001 bis 2, vorzugsweise 0,005 bis 0,5 Gew.-% Terpolymerisat, bezogen auf das Destillat.

Die erfindungsgemäßen Terpolymerisate können in den paraffinhaltigen Rohölen und Erdölprodukten als Fließverbesserer auch in Form von Mischungen eingesetzt werden, die aus Polymeren der beanspruchten Art, jedoch unterschiedlicher qualitativer und/oder quantitativer Zusammensetzung und/oder unterschiedlicher (bei 140°C gemessener) Viskosität bestehen. Auf diesem Wege lassen sich gezielt Fließverbesserer individuellen Anforderungen anpassen.

Mit dem gleichen Ergebnis, die Wirksamkeit als Fließverbesserer für bestimmte Substrate zu optimieren, können die erfindungsgemäßen Polymerisate auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind Vinylacetat enthaltende Copolymerisate oder Terpolymerisate des Ethylens, polare Verbindungen, die eine Paraffindispergierung bewirken (Paraffindispergatoren), sowie Kammpolymere.

So haben sich Mischungen aus mindestens einem der erfindungsgemäßen Co- oder Terpolymere mit mindestens einem Ethylen-Vinylester Copolymer bewährt. Besonders geeignet sind Mischungen aus mindestens einem der ertindungsgemäßen Co- oder Terpolymere mit mindestens einem Ethylen-Vinylacetat Copolymer, insbesondere mit einem Ethylen-Vinylacetat Copolymer, welches 10 bis 40 Gew.-% Vinylacetat und 60 bis 90 Gew.-% Ethylen enthält. Nach einer weiteren Ausgestaltung der Erfindung setzt man die erfindungsgemäßen Co-und Terpolymere in Mischung mit Ethylen/Vinylacetat/Neononansäurevinylester-Terpolymeren oder Ethylen-Vinylacetat/Neodecansäure-vinylester-Terpolymeren zur Verbesserung der Fließfähigkeit von Mineralölen oder Mineralöldestillaten ein. Die Terpolymere der Neononansäurevinylester bzw. der Neodecansäurevinylester enthalten außer Ethylen 10 bis 35 Gew.-% Vinylacetat und 1 bis 25 Gew.-% der jeweiligen Neoverbindung. Das Mischungsverhältnis der erfindungsgemäßen Co-oder Terpolymere mit den vorstehend beschriebenen Ethylen/Vinylester, insbesondere -acetat-Copolymeren bzw. den Terpolymeren aus Ethylen, Vinylacetat und den Vinylestern der Neononan- bzw. der Neodecansäure beträgt (in Gewichtsteilen) 20 : 1 bis 1 : 20, vorzugsweise 10 : 1 bis 1 : 10.

Zur Verwendung als Fließverbesserer können die neuen Co- und Terpolymere ferner in Mischung mit weiteren bekannten Paraffindispergatoren eingesetzt werden. Diese Additive reduzieren die Größe der Paraffinkristalle und bewirken, daß die Paraffinpartikel sich nicht absetzen, sondern, kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US-A-4,211,534). Andere Paraffindispergatoren sind die in der EP-A-0 154 177 beschriebenen alternierenden Copolymere des Maleinsäureanhydrids und α,β-ungesättigter Verbindungen, die gegebenenfalls mit primären Monoalkylaminen und/oder aliphatischen Alkoholen umgesetzt werden können, ferner die Umsetzungsprodukte von Alkenylspirobislactonen mit Aminen (vgl. EP-B-0 413 279) und nach EP-A-0 606 055 Umsetzungsprodukte von Terpolymeren auf Basis α,β-ungesättigter Dicarbonsäureanhydride, α,β-ungesättigter Verbindungen und Polyoxyalkylenether niederer ungesättigter Alkohole.

Schließlich werden in einer weiteren bewährten Variante der Erfindung die neuen Co- und Terpolymere zusammen mit Kammpolymeren als Fließverbesserer verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers - Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem C₆-C₂₄-α-Olefin und einem N-C₆-C₂₂-Alkylmaleinsäureimid (vgl.
EP 0 320 766), ferner veresterte Olefin/Maleinsäureanhydrid-Copolymere, Polymere und Copolymere von α-Olefinen und veresterte Copolymere von Styrol und Maleinsäureanhydrid.

Das Mischungsverhältnis (in Gewichtsteilen) der erfindungsgemäßen Terpolymerisate mit Paraffindispergatoren bzw. Kammpolymeren beträgt jeweils 1 : 10 bis 20 : 1, vorzugsweise 1 : 1 bis 10 : 1.

Die neuen Co- und Terpolymere und ihre Mischungen untereinander sowie mit Co-Additiven können allein oder auch zusammen mit anderen Zusatzstoffen verwendet werden, beispielsweise mit Entwachsungshilfsmitteln, Korrosionsinhibitoren, Antioxidantien, Lubricity-Additiven oder Schlamminhibitoren.

### Beispiele

- A: Allgemeine Herstellvorschrift für Copolymere aus Ethylen und Maleinsäureanhydrid (MSA) bzw. Terpolymere aus Ethylen, Maleinsäureanhydrid (MSA) und Vinylacetat.

Die Herstellung der Copolymere aus Ethylen und MSA bzw. der Terpolymere aus Ethylen, MSA und Vinylacetat erfolgt in einem kontinuierlich betriebenen Hocndruckautoklaven. Die Monomeren werden unter einem Reaktionsdruck von 150 MPa in den auf 180°C vorgeheizten Reaktor eingespeist, worauf sich eine Reaktionstemperatur von 200°C einstellt. Im Fall der Copolymerherstellung wird MSA als 33 gew.-%ige) Lösung in Methylethylketon zudosiert, für die Terpolymerherstellung werden 330 g MSA in 11 Vinylacetat gelöst. Als Initiator wird tert.-Butylperoxypivalat eingesetzt.

Die Bestimmung der Viskosität erfolgt gemäß ISO 3219 (B) mit einem Rotationsviskosimeter (Haake RV 20) mit Platte-Kegel-Meßsystem bei 140°C.
- B: Umsetzung von Copolymeren aus Ethylen und MSA bzw. Terpolymeren aus Ethylen, MSA und Vinylacetat mit primären Aminen (polymeranaloge Umsetzung).

Die Umsetzungen werden in 4-Hals-Rundkolben durchgeführt, die mit Rührer, Wasserabscheider, Innenthermometer, elektrischem Heizbad und Gaseinleitungsrohr ausgestattet sind. Das umzusetzende Co- oder Terpolymer wird in Form einer Lösung in Solvent Naphtha verwendet. Solvent Naphtha ist ein kommerziell erhältliches, oberhalb 180°C siedendes aromatisches Lösungsmittelgemisch der Firma Veba Oel.

Die Bestimmung der Festkörpergehalte erfolgt durch Trocknung der bei den Umsetzungen erhaltenen Lösungen bei 100°C unter reduziertem Druck (10 mbar) über 12 Stunden. Die Eigenviskositätswerte K werden nach Ubbelohde an einer 5 gew.-%igen Lösung in Toluol bei 25°C gemessen. Die Bestimmung der Säurezahl erfolgt potentiometrisch mit ethanolischer KOH in einem Gemisch aus Toluol und Propanol. Die eingesetzten Amine stellen handelsübliche Verbindungen dar.

### Beispiel 1

### Umsetzung eines Copolymers aus 89,1 mol-% .-Ethylen und 10,9 mol-% MSA mit Cocosfettamin

Eine Lösung von 50 g eines Copolymers aus 89,1 mol-% (70 Gew.-%) Ethylen und 10,9 mol-% (30 Gew.-%) Maleinsäureanhydrid (V₁₄₀ = 140 mPas) in 80 g Solvent Naphtha wird mit 30,6 g (0,15 mol) Cocosfettamin versetzt. Nach Zugabe von 0,2 g p-Toluolsulfonsäure wird auf 210°C erhitzt und im Laufe von 8 Stunden unter Überleiten eines schwachen Stickstoffstroms 2,8 ml Wasser ausgeschleppt.

Es fällt eine braune, viskose Lösung mit einem Festkörpergehalt von 51,6 % an. Die Säurezahl beträgt 2,9 mg KOH/g, der K-Wert des Polymeren beträgt 16,7.

### Beispiel 2

### Umsetzung eines Copolymers aus 91,7 mol-% Ethylen und 8,3 mol-% MSA mit Cocosfettamin

Die Lösung von 62,5 g eines Copolymers aus 91,7 mol-% (76 Gew.-%) Ethylen und 8,3 mol-% (24 Gew.-%) Maleinsäureanhydrid (V₁₄₀ = 107 mPas) in 93 g Solvent Naphtha wird mit 30,6 g (0,15 mol) Cocosfettamin versetzt. Nach Zugabe von 0,2 g p-Toluolsulfonsäure wird auf 200°C erhitzt und im Laufe von 8 Stunden unter Überleiten eines schwachen Stickstoffstroms 2,6 ml Wasser ausgeschleppt.

Es fällt eine braune, viskose Lösung mit einem Festkörpergehalt von 55,2 % an. Die Säurezahl beträgt 3,1 mg KOH/g, der K-Wert des Polymeren beträgt 19,2.

### Beispiel 3

### Umsetzung eines Copolymers aus 94,7 mol-% Ethylen und 5,3 mol-% MSA mit Cocosfettamin

Die Lösung von 86 g eines Copolymers aus 94,7 mol-% (82 Gew.-%) Ethylen und 5,3 mol-% (18 Gew.-%) Maleinsäureanhydrid (V₁₄₀ = 81 mPas) in 117 g Solvent Naphtha wird mit 30,6 g (0,15 mol) Cocosfettamin versetzt. Nach Zugabe von 0,2 g p-Toluolsulfonsäure wird auf 205°C erhitzt und im Laufe von 8 Stunden unter Überleiten eines schwachen Stickstoffstroms 2,6 ml Wasser ausgeschleppt.

Es fällt eine braune, viskose Lösung mit einem Festkörpergehalt von 54,8 % an. Die Säurezahl beträgt 3,5 mg KOH/g, der K-Wert des Polymeren beträgt 18,5.

### Beispiel 4

### Umsetzung eines Terpolymers aus Ethylen, Vinylacetat und MSA mit Talgfettamin.

Die Lösung von 80 g eines Terpolymers aus 90,5 mol-% (74 Gew.-%) Ethylen, 3,2 mol-% (8 Gew.-%) Vinylacetat und 6,3 mol-% (18 Gew.-%) Maleinsäureanhydrid (V₁₄₀ = 1350 mPas) in 120 g Solvent Naphtha wird mit 41,3 g (0,15 mol) Talgfettamin versetzt. Nach Zugabe von p-Toluolsulfonsäure wird auf 250°C erhitzt und im Laufe von 10 Stunden unter Überleiten eines schwachen Stickstoffstroms 2,6 ml Wasser ausgeschleppt.

Es fällt eine gelbliche, viskose Lösung mit einem Festkörpergehalt von 50,7 % an. Die Säurezahl beträgt 2,1 mg KOH/g, der K-Wert des Polymeren beträgt 32.
- C: Polymerisation von Ethylen mit einem N-substituierten Maleinimid (inverses Herstellungsverfahren)

### Beispiel 5

### Herstellung eines Copolymers aus Ethylen und Stearylmaleinimid

In einem kontinuierlich betriebenen Hochdruckautoklaven werden 1050 g/h Cocosfettalkylmaleinimid (hergestellt durch Imidierung äquimolarer Mengen MSA mit Cocosfettamin unter Wasserauskreisen bei 160°C, Überleiten von N₂) als 30 gew.-%ige Lösung in Methylethylketon zusammen mit 8,7 kg/h Ethylen bei 150 MPa und 220°C unter Zusatz von tert.-Butylperoxypivalat als Initiator copolymerisiert. Die Verweilzeit im Autoklaven beträgt ca. 120 Sekunden.

Nach Abtrennung von nichtumgesetzten Monomeren durch Entspannen auf Normaldruck entstehen 2,7 kg/h eines gelbbraunen Wachses mit einem Cocosfettalkylmaleinimidanteil von 4,1 mol-% (39 Gew.-%) und einer Schmelzviskosität V₁₄₀ von 55 mPas. Die Säurezahl beträgt 2,3 mg KOH/g.
- D: Wirksamkeit der Copolymerisate bzw. Terpolymerisate

Das anwendungstechnische Verhalten der nach den Beispielen 1 - 5 erhaltenen Co- bzw. Terpolymere als Fließverbesserer für Mineralöldestillate wird an Hand des CFPP-Tests (Cold Filter Plugging Test nach EN 116) in den Testölen 1 - 3, bei denen es sich um verschiedene Destillate skandinavischer Raffinerien handelt, geprüft (Tabelle 2). Die Charakterisierung der Testöle ist nachstehend in Tabelle 1 aufgeführt. Die Co- bzw. Terpolymere werden als 50 %ige Lösungen in Solvent Naphtha eingesetzt. Als Vergleich ist in Tabelle 2 die Wirksamkeit eines handelsüblichen Ethylen-Vinylacetat-Copolymers (EVA-Copolymer) mit 13,3 mol-% (32 Gew-%) Vinylacetat und einer Schmelzviskosität V₁₄₀ von 125 mPas aufgeführt.

**Tabelle 1**

| | Testöl 1 | Testöl 2 | Testöl 3 | Testöl 4 |
|---|---|---|---|---|
| Siedebeginn | 195°C | 200°C | 127°C | 175°C |
| 20% | 226°C | 236°C | 193°C | 223°C |
| 90% | 280°C | 284°C | 318°C | 326°C |
| Siedeende | 311°C | 299°C | 334°C | 354°C |
| Cloud Point | -30°C | -28°C | -23°C | -9°C |
| CFPP | -31°C | -32°C | -23°C | -12°C |

**Tabelle 2:**

| CFPP-Wirksamkeit | | | | | | | | | | |
|---|---|---|---|---|---|---|---|---|---|---|
| | Testöl 1 | | | | Testöl 2 | | | | Testöl 3 | |
| Beispiel | 100 ppm | 200 ppm | 400 ppm | 1000 ppm | 200 ppm | 400 ppm | 600 ppm | 1000 ppm | 100 ppm | 400 ppm |
| 1 | -33 | -35 | -39 | <-40 | -34 | -34 | -34 | -34 | -24 | <-40 |
| 2 | -36 | -40 | <-40 | <-40 | -33 | -33 | -33 | -32 | -28 | <-40 |
| 3 | -38 | -40 | <-40 | <-40 | -33 | -32 | -32 | -31 | -27 | <-40 |
| 5 | -37 | -39 | <-40 | <-40 | -33 | -33 | -34 | -34 | -27 | -27 |
| E-VA-Copolymer | -37 | -35 | -35 | -34 | -27 | -29 | -31 | -29 | -26 | -35 |

### Paraffindispergierung in Mitteldestillaten

Für die folgenden Versuche wird ein repräsentativer Winterdieselkraftstoff einer deutschen Raffinerie verwendet (Testöl 4). Das Mitteldestillat wird bei 40°C unter Schütteln mit den angegebenen Mengen der erfindungsgemäßen Co- bzw. Terpolymere und zusätzlich 400 ppm eines handelsüblichen Ethylen-Vinylacetat-Copolymers (EVA) mit 32 Gew.-% Vinylacetat und einer Schmelzviskosität (bei 140°C) von 200 mPas versetzt und anschließend auf Raumtemperatur abgekühlt. Von dem so additivierten Mitteldestillat wird gemäß EN 116 der CFPP-Wert bestimmt.

Das additivierte Mitteldestillat wird in 200 ml-Meßzylindern in einem Kälteschrank mit -2°C/Stunde auf -13°C abgekühlt und 13 Stunden bei dieser Temperatur gelagert. Anschließend werden visuell Volumen und Aussehen sowohl der sedimentierten Paraffinphase wie auch der darüber stehenden Ölphase bestimmt und beurteilt. Zusätzlich werden die unteren 20 Vol-% isoliert und der Cloud Point bestimmt. Eine geringe Abweichung (Δ CP) des Cloud Points der unteren Phase (CP_{KS}) vom Blindwert des Öls zeigt eine gute Paraffindispergierung.

**Tabelle 3:**

| Wirksamkeit als Paraffindispergator in Testöl 4 | | | | | | | | |
|---|---|---|---|---|---|---|---|---|
| Beispiel | EVA ppm | CFPP | Paraffin-Phase | | Ölphase | | CP_{KS} °C | Δ CP °C |
| | | | Vol.% | Aussehen | Vol.-% | Aussehen | | |
| 4 | - | -16 | 100 | dispergiert | 0 | - | 8,1 | 0,5 |
| 5 | 400 | -24 | 90 | dispergiert | 10 | trüb | -8,3 | 0,3 |
| Vergleich | 400 | -25 | 30 | dispergiert | 70 | klar | -1,5 | 7,1 |

## Patentansprüche

1. Öllösliche, statistische Co- und Terpolymere auf Basis von α,β-ungesättigten Verbindungen und α,β-ungesättigten Dicarbonsäureanhydriden, dadurch gekennzeichnet, daß sie eine Schmelzviskosität bei 140°C (V₁₄₀) von 10 bis 10.000 mPas aufweisen, und
60 - 99 mol-% an bivalenten Struktureinheiten A und gegebenenfalls B enthalten
(A) -CH₂-CH₂- 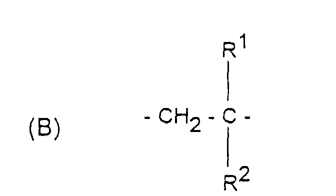
wobei der Anteil der Struktureinheiten A an der Summe der Struktureinheiten A und B mindestens 70 mol-% beträgt,
wobei R¹ und R² verschieden sind und R¹ Wasserstoff oder Methyl und R² Wasserstoff, eine Gruppe COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, bedeuten,
1 - 40 mol-% an bivalenten Struktureinheiten C und gegebenenfalls D sowie E enthalten, 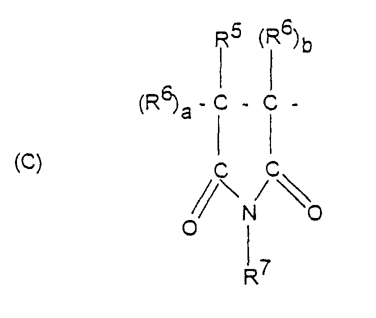 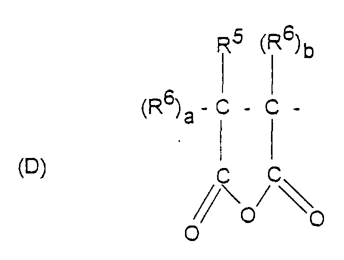 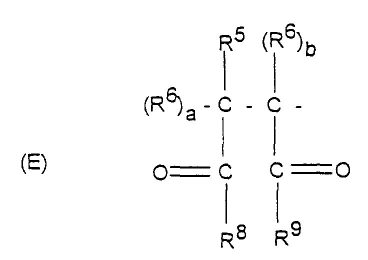
wobei der Anteil der bivalenten Struktureinheiten C größer als 80 mol-%, bezogen auf die Summe der Struktureinheiten C, D und E ist, R⁵ und R⁶ unabhängig voneinander Wasserstoff oder Methyl bedeuten, a, b gleich 0 oder 1 und a + b gleich 1 ist, R⁷ gleich oder verschieden ist und eine C₆-C₂₄-Alkylgruppe, eine Gruppe der allgemeinen Formel F 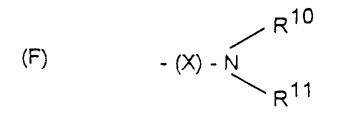 oder eine Gruppe der allgemeinen Formel G darstellt 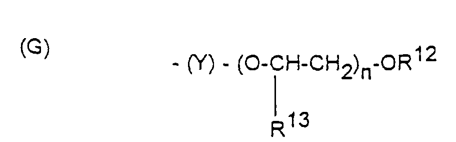 worin X eine C₂-C₄-Alkylengruppe, R¹⁰ Methyl oder eine C₆-C₂₂-Alkylgruppe und R¹¹ eine C₆-C₂₄-Alkylgruppe bedeutet, Y eine C₂-C₄-Alkylengruppe, n eine Zahl zwischen 1 und 100, R¹² C₁-C₃₀-Alkyl, C₅-C₁₂-Cycloalkyl oder C₆-C₃₀-Aryl und R¹³ Wasserstoff, C₁-C₄-Alkyl, bevorzugt Methyl, darstellt und R⁸ und R⁹ gleich oder verschieden sind und einen Rest -NHR⁷ oder OR¹⁴ darstellen, wobei R¹⁴ Wasserstoff oder ein Ammoniumkation der Formel H₃N^{⊕}R⁷ ist, wobei für den Fall, daß die Struktureinheiten C und E verschiedene Reste R⁷ enthalten, der Anteil der Reste R⁷ mit einer Bedeutung gemäß der Formel G max. 10 mol-%, bezogen auf die Gesamtzahl der Reste R⁷ beträgt.

2. Co- und Terpolymere nach Anspruch 1, dadurch gekennzeichnet, daß sie 70 - 98 mol-%, insbesondere 80 - 97,5 mol-% an bivalenten Struktureinheiten A und gegebenenfalls Struktureinheiten B sowie 2 - 30 mol-%, insbesondere 2,5 - 20 mol-% an bivalenten Struktureinheiten C und gegebenenfalls D sowie E enthalten.

3. Co- und Terpolymere nach Anspruch 1 oder 2, dadurch, gekennzeichnet, daß der Anteil der Struktureinheiten A an der Summe der Struktureinheiten A und B mindestens 80 mol-% und insbesondere mindestens 90 mol-% beträgt.

4. Co- und Terpolymere nach einem oder mehreren der Ansprüche 1 bis 3,
dadurch gekennzeichnet daß der Anteil der Struktureinheiten C, bezogen auf die Summe der Struktureinheiten C, D und E, mindestens 85 mol-%, besonders bevorzugt mindestens 90 mol-% und insbesondere mindestens 93 mol-% beträgt.

5. Co- und Terpolymere nach einem oder mehreren der Ansprüche 1 - 4,
dadurch gekennzeichnet, daß der Anteil der Reste R⁷ mit einer Bedeutung gemäß der Formel G maximal 10 mol-%, bevorzugt maximal 6 mol-% und insbesondere maximal 3 mol-%, bezogen auf die Gesamtzahl der Reste R⁷, beträgt.

6. Co- und Terpolymere nach einem oder mehreren der Ansprüche 1 - 5,
dadurch gekennzeichnet, daß sie Struktureinheiten B enthalten, die sich vom Vinylacetat, Acrylsäuremethylester, Methacrylsäuremethylester, Acrylsäureethylester oder Methacrylsäureethylester ableiten, und Struktureinheiten C enthalten, die sich von Maleinsäureanhydrid ableiten.

7. Co- und Terpolymere nach einem oder mehreren der Ansprüche 1 - 6, dadurch gekennzeichnet, daß sich die Imid-Gruppe -NR⁷in den Struktureinheiten C und die Amidgruppe -NR⁷ sowie das Ammonium-Kation H₃N^{⊕}R⁷ in den Struktureinheiten E von primären Aminen der Formel L ableitet,
(L) NH₂R⁷
bevorzugt von Cocosfettaminen oder Talgfettaminen.

8. Verfahren zur Herstellung der Co- und Terpolymeren nach Anspruch 1, dadurch gekennzeichnet, daß man zunächst Ethylen und gegebenenfalls weitere Monomere der allgemeinen Formel H 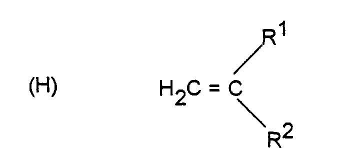 wobei R¹ und R² verschieden sind, R¹ Wasserstoff oder Methyl und R² Wasserstoff, eine Gruppe -COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, darstellen und Monomere der allgemeinen Formel J und/oder K 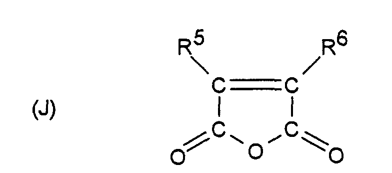 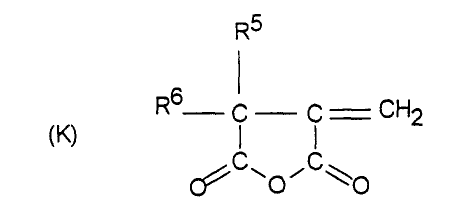 wobei R⁵ und R⁶ unabhängig voneinander Wasserstoff oder Methyl bedeuten, miteinander polymerisiert und das erhaltene Co- oder Terpolymer anschließend mit einem oder mehreren Aminen der Formel L umsetzt,
(L) NH₂R⁷
wobei R⁷ eine C₆-C₂₄-Alkylgruppe darstellt, einen Rest der allgemeinen Formel F 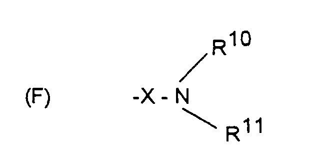 oder einen Rest der Formel G 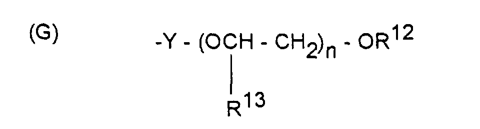 wobei X eine C₂-C₄-Alkylengruppe und R¹⁰ Methyl oder eine C₆-C₂₂-Alkylgruppe, R¹¹ eine C₆-C₂₂-Alkylgruppe darstellt, Y eine C₂-C₄-Alkylengruppe, n eine Zahl zwischen 1 und 100, R¹² C₁-C₃₀-Alkyl, C₅-C₁₂-Cycloalkyl oder C₆-C₃₀-Aryl und R¹³ Wasserstoff, C₁-C₄-Alkyl, bevorzugt Methyl, bedeutet.

9. Verfahren zur Herstellung der Co- und Terpolymere nach Anspruch 1, dadurch gekennzeichnet, daß man zunächst Monomere der allgemeinen Formeln J und/oder K 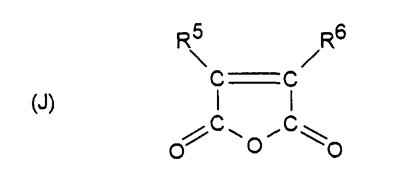 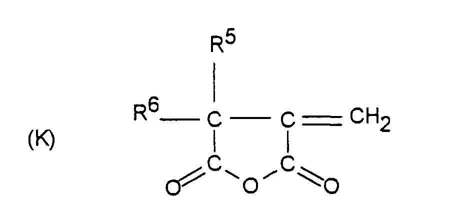 wobei R⁵ und R⁶ unabhängig voneinander Wasserstoff oder Methyl bedeuten, mit einem oder mehreren Aminen der Formel L
(L) NH₂R⁷
wobei R⁷ eine C₆-C₂₄-Alkylgruppe, einen Rest der Formel F 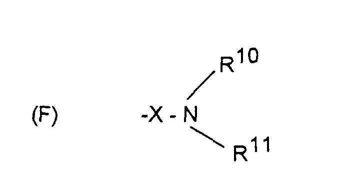 oder einen Rest der Formel G darstellt 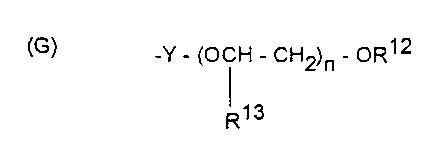 wobei X eine C₂-C₄-Alkylengruppe, R¹⁰ Methyl oder eine C₆-C₂₂-Alkylgruppe und R¹¹ eine C₆-C₂₂-Alkylgruppe bedeutet, Y eine C₂-C₄-Alkylengruppe, n eine Zahl zwischen 1 und 100, R¹² C₁-C₃₀-Alkyl, C₅-C₁₂-Cycloalkyl oder C₆-C₃₀-Aryl und R¹³ Wasserstoff, C₁-C₄-Alkyl, bevorzugt Methyl, bedeutet, umsetzt und das Umsetzungsprodukt anschließend mit Ethylen und gegebenenfalls weiteren Monomeren der allgemeinen Formel H polymerisiert, 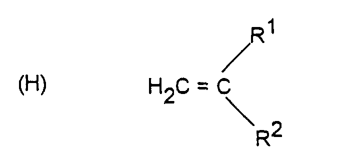 wobei R¹ und R² verschieden sind, R¹ Wasserstoff oder Methyl und R² Wasserstoff, eine Gruppe -COOR³ oder eine Gruppe -OOCR⁴ bedeutet, worin R³ und R⁴ gleich oder verschieden sind und eine lineare oder verzweigte C₁-C₁₂-Alkylgruppe, bevorzugt Methyl oder Ethyl, darstellen.

10. Verfahren nach Anspruch 8 oder 9, dadurch gekennzeichnet, daß man die Polymerisation als Hochdruckpolymerisation kontinuierlich oder diskontinuierlich, bevorzugt kontinuierlich, bei einer Temperatur von 100 bis 350°C, bevorzugt 140 - 300°C, und unter einem Druck von 50 - 400 MPa, bevorzugt 100 - 300 MPa durchführt.

11. Verfahren nach einem oder mehreren der Ansprüche 8 - 10, dadurch gekennzeichnet, daß man zur Polymerisation 0,1 - 20 Gew.-%, bevorzugt 0,2 - 10 Gew.-%, bezogen auf die Monomere, eines Radikalkettenstarters einsetzt.

12. Verfahren nach einem oder mehreren der Ansprüche 8 - 11, dadurch gekennzeichnet, daß man zur Polymerisation 0,2 - 15 mol-%, bevorzugt 0,5 - 10 mol-% der α,β-ungesättigten Dicarbonsäureanhydride sowie 85 - 99,2 mol-%, bevorzugt 90 - 99,5 mol-% der α,β-ungesättigten Verbindungen einsetzt.

13. Verfahren nach einem oder mehreren der Ansprüche 8 - 12, dadurch gekennzeichnet, daß die Polymerisation in Gegenwart von 0,1 - 20 Gew.-%, bezogen auf den Monomerengehait, eines Molekulargewichtsreglers erfolgt.

14. Verwendung der Co- und Terpolymere nach Anspruch 1 als Fließverbesserer für paraffinhaltige Rohöle und insbesondere für Erdölprodukte.

15. Verwendung der Co- und Terpolymere nach Anspruch 14, dadurch gekennzeichnet, daß man dem paraffinhaltigen Rohöl oder Erdölprodukt 10-10.000 ppm, bevorzugt 20 - 5.000 ppm und besonders bevorzugt 50 - 2.000 ppm des Co- oder Terpolymeren zusetzt.

16. Paraffinhaltige Rohöle und Erdölprodukte enthaltend mindestens ein Co- oder Terpolymer nach Anspruch 1.

17. Mischung enthaltend mindestens ein Co- oder Terpolymer nach Anspruch 1 und mindestens ein Ethylen-Vinylester-Copolymer, bevorzugt ein Ethylen-Vinylacetat-Copolymer und insbesondere ein Ethylen-Vinylacetat-Copolymer, welches 10 bis 40 Gew.-% Vinylacetat und 60 - 90 Gew.-% Ethylen enthält.

18. Mischungen nach Anspruch 17, dadurch gekennzeichnet, daß sie die Co-oder Terpolymere und die Ethylen-Vinylester-Copolymeren im Verhältnis (in Gewichtsteilen) 20 : 1 bis 1 : 20, vorzugsweise 10 : 1 bis 1 : 10 enthalten.

19. Mischungen enthaltend Co- oder Terpolymere nach Anspruch 1 und Ethylen/Vinylacetat/Neononansäurevinylesterterpolymere oder Ethylen/Vinylacetat/Neodecansäurevinylester-Terpolymere im Verhältnis (in Gewichtsteilen) 20 : 1 bis 1 : 20, vorzugsweise 10 : 1 bis 1 : 10.

20. Mischungen nach Anspruch 19, dadurch gekennzeichnet, daß die Ethylen/Vinylacetat/Neononansäurevinylester-Terpolymere bzw. die Ethylen/Vinylacetat/Neodecansäurevinylester-Terpolymere außer Ethylen 10 bis 35 Gew.-% Vinylacetat und 1 bis 25 Gew.-% Neononansäurevinylester bzw. Neodecansäurevinylester enthalten.

21. Mischungen enthaltend Co- oder Terpolymere nach Anspruch 1 und Paraffindispergatoren im Verhältnis (in Gewichtsteilen) 1 : 10 bis 20 : 1, vorzugsweise 1 : 1 bis 10 : 1.

22. Mischungen enthaltend Co- oder Terpolymere nach Anspruch 1 und Kammpolymere im Verhältnis (in Gewichtsteilen) 1 : 10.bis 20 : 1, vorzugsweise 1 : 1 bis 10 : 1.

23. Paraffinhaltige Rohöle und Erdölprodukte, enthaltend Mischungen nach einem oder mehreren der Ansprüche 17 bis 22.

## Claims

1. An oil-soluble random co- or terpolymer based on α,β-unsaturated compounds and α,β-unsaturated dicarboxylic anhydrides, having a melt viscosity at 140°C (V₁₄₀) from 10 to 10,000 mPas and containing
60 - 99 mol% of bivalent structural units A and, if desired, B
(A) -CH₂-CH₂- 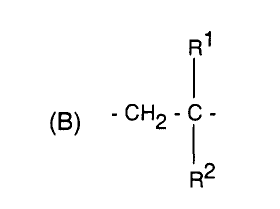
where the proportion of structural units A is at least 70 mol% of the sum of the structural units A and B and,
where R¹ and R² are different and R¹ is hydrogen or methyl and R² is hydrogen, a group COOR³ or a group -OOCR⁴, in which R³ and R⁴ are identical or different and are a linear or branched C₁-C₁₂-alkyl group, preferably methyl or ethyl,
1 - 40 mol% of bivalent structural units C and, if desired, D and E 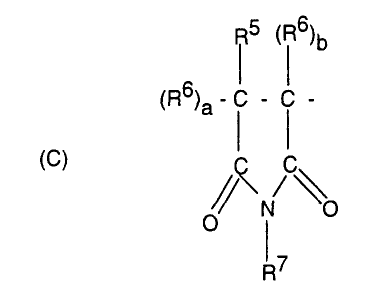 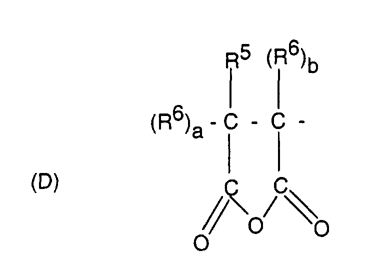 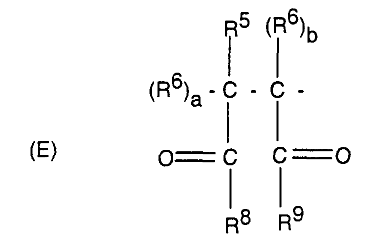
where the proportion of bivalent structural units C is greater than 80 mol%, based on the sum of the structural units C, D and E, R⁵ and R⁶, independently of one another, are hydrogen or methyl, a and b are 0 or 1 and a + b is 1, R⁷ is identical or different and is a C₆-C₂₄-alkyl group, a group of the formula F 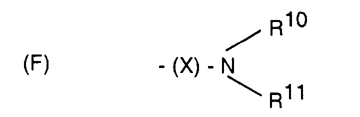 or a group of the formula G 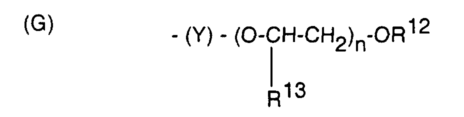 in which X is a C₂-C₄-alkylene group, R¹⁰ is methyl or a C₆-C₂₂-alkyl group and R¹¹ is a C₆-C₂₄-alkyl group, Y is a C₂-C₄-alkylene group, n is a number between 1 and 100, R¹² is C₁-C₃₀-alkyl, C₅-C₁₂-cycloalkyl or C₆-C₃₀-aryl and R¹³ is hydrogen, C₁-C₄-alkyl, preferably methyl, and R⁸ and R⁹ are identical or different and are a radical -NHR⁷ or OR¹⁴, where R¹⁴ is hydrogen or an ammonium cation of the formula H₃N^{⊕}R⁷, in which, where the structural units C and E contain different radicals R⁷, the proportion of the radicals R⁷ having a meaning according to the formula G is not more than 10 mol%, based on the total number of radicals R⁷.

2. A co- or terpolymer as claimed in claim 1, which contains 70 - 98 mol%, in particular 80 - 97.5 mol%, of bivalent structural units A and, if desired, structural units B and 2 - 30 mol%, in particular 2.5 - 20 mol%, of bivalent structural units C and, if desired, D and E.

3. A co- or terpolymer as claimed in claim 1 or 2, wherein the proportion of structural units A is at least 80 mol% and in particular at least 90 mol% of the sum of the structural units A and B.

4. A co- or terpolymer as claimed in one or more of claims 1 to 3, wherein the proportion of structural units C, based on the sum of the structural units C, D and E, is at least 85 mol%, particularly preferably at least 90 mol% and in particular at least 93 mol%.

5. A co- or terpolymer as claimed in one or more of claims 1 - 4, wherein the proportion of the radicals R⁷ having a meaning according to the formula G is not more than 10 mol%, preferably not more than 6 mol% and in particular not more than 3 mol%, based on the total number of radicals R⁷.

6. A co- or terpolymer as claimed in one or more of claims 1 - 5, which contains structural units B which are derived from vinyl acetate, methyl acrylate, methyl methacrylate, ethyl acrylate or ethyl methacrylate and structural units C which are derived from maleic anhydride.

7. A co- or terpolymer as claimed in one or more of claims 1 - 6, wherein the imido group -NR⁷ in the structural units C and the amido group -NR⁷ and the ammonium cation H₃N^{⊕}R⁷ in the structural units E are derived from primary amines of the formula L
(L) NH₂R⁷
preferably from coconut fatty amines or tallow fatty amines.

8. A process for the preparation of the co- and terpolymers as claimed in claim 1, wherein ethylene and, if desired, further monomers of the formula H 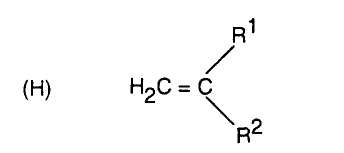 in which R¹ and R² are different, R¹ is hydrogen or methyl and R² is hydrogen, a group -COOR³ or a group -OOCR⁴, in which R³ and R⁴ are identical or different and are a linear or branched C₁-C₁₂-alkyl group, preferably methyl or ethyl, and monomers of the formula J and/or K, 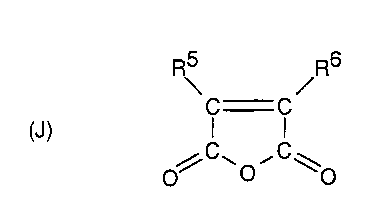 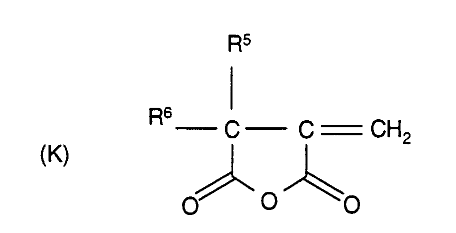 in which R⁵ and R⁶, independently of one another, are hydrogen or methyl, are first polymerized with one another and the co- and terpolymer obtained is then reacted with one or more amines of the formula L
(L) NH₂R⁷
in which R⁷ is a C₆-C₂₄-alkyl group, a radical of the formula F 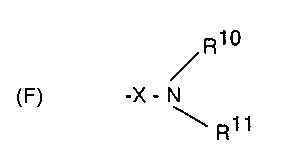 or a radical of the formula G 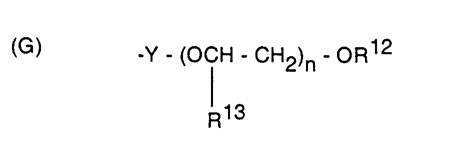 in which X is a C₂-C₄-alkylene group and R¹⁰ is methyl or a C₆-C₂₂-alkyl group, R¹¹ is a C₆-C₂₂-alkyl group, Y is a C₂-C₄-alkylene group, n is a number between 1 and 100, R¹² is C₁-C₃₀-alkyl, C₅-C₁₂-cycloalkyl or C₆-C₃₀-aryl and R¹³ is hydrogen or C₁-C₄-alkyl, preferably methyl.

9. A process for the preparation of the co- and terpolymers as claimed in claim 1, wherein monomers of the formulae J and/or K 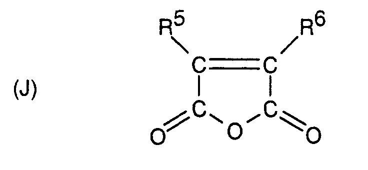 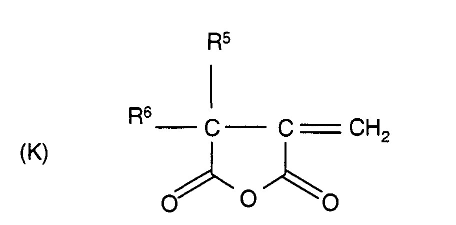 in which R⁵ and R⁶, independently of one another, are hydrogen or methyl are first reacted with one or more amines of the formula L
(L) NH₂R⁷
in which R⁷ is a C₆-C₂₄-alkyl group, a radical of the formula F 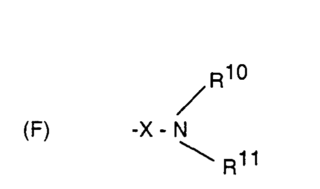 or a radical of the formula G 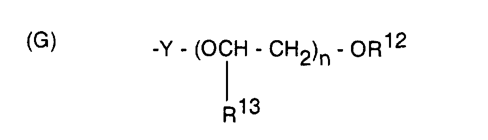 in which X is a C₂-C₄-alkylene group and R¹⁰ is methyl or a C₆-C₂₂-alkyl group and R¹¹ is a C₆-C₂₂-alkyl group, Y is a C₂-C₄-alkylene group, n is a number between 1 and 100, R¹² is C₁-C₃₀-alkyl, C₅-C₁₂-cycloalkyl or C₆-C₃₀-aryl and R¹³ is hydrogen or C₁-C₄-alkyl, preferably methyl, and the reaction product is then polymerized with ethylene and, if desired, further monomers of the formula H 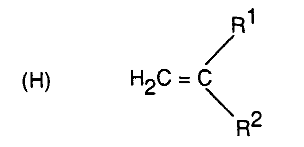 in which R¹ and R² are different, R¹ is hydrogen or methyl and R² is hydrogen, a group -COOR³ or a group -OOCR⁴, in which R³ and R⁴ are identical or different and are a linear or branched C₁-C₁₂-alkyl group, preferably methyl or ethyl.

10. The process as claimed in claim 8 or 9, wherein the polymerization is carried out continuously or batchwise, preferably continuously, as a highpressure polymerization, at a temperature of from 100 to 350°C, preferably 140 - 300°C, and under a pressure of 50 - 400 MPa, preferably from 100 - 300 MPa.

11. The process as claimed in one or more of claims 8 - 10, wherein 0.1 - 20% by weight, preferably 0.2 - 10 % by weight, based on the monomers, of a free radical initiator are used for the polymerization.

12. The process as claimed in one or more of claims 8 - 11, wherein 0.2 - 15 mol%, preferably 0.5 - 10 mol%, of the α,β-unsaturated dicarboxylic anhydrides and 85 - 99.2 mol%, preferably 90 - 99.5 mol%, of the α,β-unsaturated compounds are used for the polymerization.

13. The process as claimed in one or more of claims 8 - 12, wherein the polymerization is carried out in the presence of 0.1 - 20 % by weight, based on the monomer content, of a chain transfer agent.

14. The use of the co- and terpolymers as claimed in claim 1 as flow improvers for paraffin-containing crude oils and in particular for petroleum products.

15. The use of the co- and terpolymers as claimed in claim 14, wherein 10 - 10,000 ppm, preferably 20 - 5000 ppm and particularly preferably 50 - 2000 ppm of the co- or terpolymers are added to the paraffin-containing crude oil or petroleum product.

16. A paraffin-containing crude oil or petroleum product containing at least one co- or terpolymer as claimed in claim 1.

17. A mixture containing at least one co- or terpolymer as claimed in claim 1 and at least one ethylene/vinyl ester copolymer, preferably an ethylene/vinyl acetate copolymer and in particular an ethylene/vinyl acetate copolymer which contains from 10 to 40% by weight of vinyl acetate and 60 - 90% by weight of ethylene.

18. A mixture as claimed in claim 17, which contains the co- or terpolymers and the ethylene/vinyl ester copolymers in the ratio (in parts by weight) 20 : 1 to 1 : 20, preferably 10 : 1 to 1 : 10.

19. A mixture containing co- or terpolymers as claimed in claim 1 and ethylene/vinyl acetate/vinyl neononanoate terpolymers or ethylene/vinyl acetate/vinyl neodecanoate terpolymers in the ratio (in parts by weight) 20 : 1 to 1 : 20, preferably 10 : 1 to 1 : 10.

20. A mixture as claimed in claim 19, wherein the ethylene/vinyl acetate/vinyl neononanoate terpolymers and the ethylene/vinyl acetate/vinyl neodecanoate terpolymers contain from 10 to 35% by weight of vinyl acetate and from 1 to 25% by weight of vinyl neononanoate or vinyl neodecanoate, respectively, in addition to ethylene.

21. A mixture containing co- or terpolymers as claimed in claim 1 and paraffin dispersants in the ratio (in parts by weight) 1 : 10 to 20 : 1, preferably 1 : 1 to 10 : 1.

22. A mixture containing co- or terpolymers as claimed in claim 1 and comb polymers in the ratio (in parts by weight) 1 : 10 to 20 : 1, preferably 1 : 1 to 10 : 1.

23. A paraffin-containing crude oil or petroleum product, containing a mixture as claimed in one or more of claims 17 to 22.

## Revendications

1. Co- et terpolymères statistiques, solubles dans l'huile, à base de composés α,β-insaturés et d'anhydrides dicarboxyliques α,β-insaturés, caractérisés en ce qu'ils présentent une viscosité à l'état fondu à 140°C (V₁₄₀) de 10 à 10000 mPas, et
de 60 à 99% en mole de motifs de structure bivalents A et éventuellement B
(A) -CH₂-CH₂- 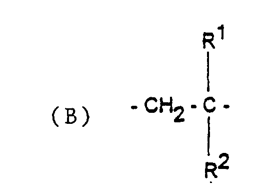
dans lesquels la proportion de motifs de structure A par rapport à la somme des motifs de structure A et B s'élève à au moins 70% en mole,
dans lesquels R¹ et R² sont différents et R¹ représente un atome d'hydrogène ou un groupe méthyle et R² représente un atome d'hydrogène, un groupe COOR³ ou un groupe -OOCR⁴, dans lesquels R³ et R⁴ sont identiques ou différents et représentent un groupe alkyle linéaire ou ramifié en C₁ à C₁₂, de préférence un groupe méthyle ou éthyle,
de 1 à 40% en mole de motifs de structure bivalents C et éventuellement D ainsi que E, 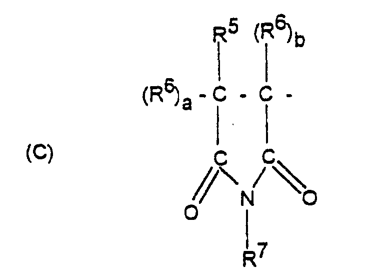 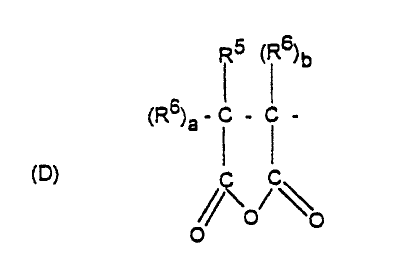 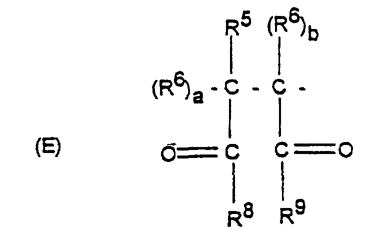
dans lesquels la proportion de motifs de structure bivalents C est supérieure à 80% en mole, par rapport à la somme des motifs de structure C, D et E, R⁵ et R⁶ représentent, identiques ou différents, un atome d'hydrogène ou un groupe méthyle, a, b sont égaux à 0 ou 1 et a + b est égal 1, les R⁷ sont identiques ou différents et représentent un groupe alkyle en C₆ à C₂₄, un groupe de formule générale F 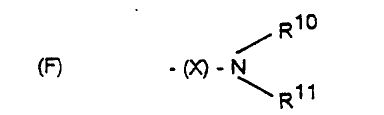 ou un groupe de formule générale G 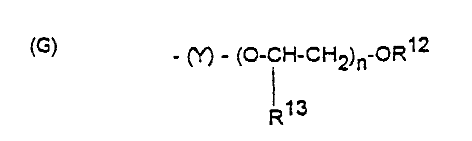
dans lesquelles X représente un groupe alkylène en C₂ à C₄, R¹⁰ un groupe méthyle ou un groupe alkyle en C₆ à C₂₂ et R¹¹ représente un groupe alkyle en C₆ à C₂₄, Y un groupe alkylène en C₂ à C₄, n représente un nombre compris entre 1 et 100, R¹² un groupe alkyle en C₁ à C₃₀, cycloalkyle en C₅ à C₁₂ ou aryle en C₆ à C₃₀ et R¹³ un atome d'hydrogène, un groupe alkyle en C₁ à C₄, de préférence le méthyle, et R⁸ et R⁹ sont identiques ou différents et représentent un reste -NHR⁷ ou OR¹⁴, dans laquelle R¹⁴ représente un atome d'hydrogène ou un cation ammonium de formule H₃N^{⊕}R⁷, dans lesquels au cas où les motifs de structure C et E contiennent des restes R⁷ différents, la proportion des restes R⁷ avec une signification conforme à la formule G s'élève au-maximum à 10% en mole, par rapport au nombre total de groupes R⁷.

2. Co- et terpolymères selon la revendication 1, caractérisés en ce qu'ils contiennent de 70 à 98% en mole, en particulier de 80 à 97,5% en mole de motifs de structure A et éventuellement en motifs de structure B ainsi que de 2 à 30% en mole, en particulier de 2,5 à 20% en mole de motifs de structure bivalents C et éventuellement D ainsi que E.

3. Co- et terpolymères selon la revendication 1 ou 2, caractérisés en ce que la proportion des motifs de structure A par rapport à la somme des motifs de structure A et B se monte à au moins 80% en mole et en particulier à au moins 90% en mole.

4. Co- et terpolymères selon une ou plusieurs des revendications 1 à 3, caractérisés en ce que la proportion des motifs de structure C, par rapport à la somme des motifs de structure C, D et E se monte à au moins 85% en mole, de manière particulièrement préférée à au moins 90% en mole et en particulier à au moins 93% en mole.

5. Co- et terpolymères selon une ou plusieurs des revendications 1 à 4, caractérisés en ce que la proportion des résidus R⁷ avec une signification conforme à la formule G se monte au maximum à 10% en mole, de préférence au maximum à 6% en mole et en particulier au maximum à 3% en mole, par rapport au nombre total de résidus R⁷.

6. Co- et terpolymères selon une ou plusieurs des revendications 1 à 5, caractérisés en ce qu'ils contiennent des motifs de structure B qui dérivent de l'acétate de vinyle, de l'acrylate de méthyle, du méthacrylate de méthyle, de l'acrylate d'éthyle ou du méthacrylate d'éthyle, et contiennent des motifs de structure C qui dérivent de l'anhydride maléique.

7. Co- et terpolymères selon une ou plusieurs des revendications 1 à 6, caractérisés en ce que le groupe imide -NR⁷ dans les motifs de structure C et le groupe amide -NR⁷ ainsi que le cation ammonium H₃N^{⊕}R⁷ dans les motifs de structure E sont obtenus à partir d'amines primaires de formule L,
(L) NH₂R⁷
de préférence d'amines grasses de coco ou d'amines grasses de suif.

8. Procédé pour la préparation des co- et terpolymères selon la revendication 1, caractérisé en ce qu'on fait polymériser d'abord l'éthylène et éventuellement d'autres monomères de formule générale H 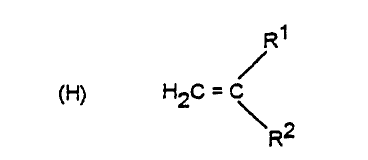 dans laquelle R¹ et R² sont différents, R¹ représente un atome d'hydrogène ou un groupe méthyle et R² un atome d'hydrogène, un groupe -COOR³ ou un groupe -OOCR⁴, dans lesquels R³ et R⁴ sont identiques ou différents et représentent un groupe alkyle en C₁ à C₁₂ linéaire ou ramifié, de- préférence le méthyle ou l'éthyle, et des monomères de formule générale J et/ou K 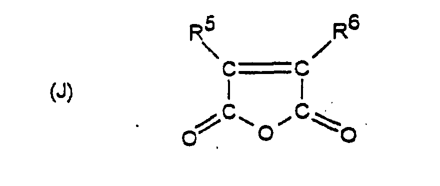 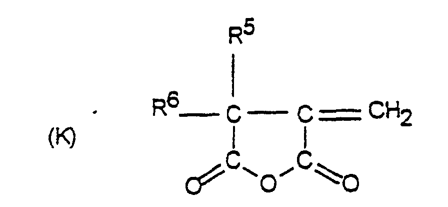 dans lesquelles R⁵ et R⁶ représentent indépendamment l'un de l'autre un atome d'hydrogène ou un groupe méthyle et en ce qu'on met ensuite à réagir le co- ou terpolymère obtenu avec une ou plusieurs amines de formule L,
(L) NH₂R⁷
dans laquelle R⁷ représente un groupe alkyle en C₆ à C₂₄, un résidu de formule générale F 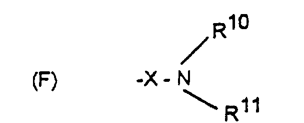 ou un résidu de formule G 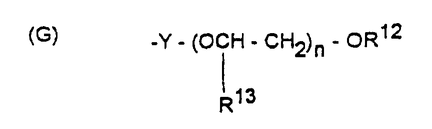 dans lesquelles X représente un groupe alkylène en C₂ à C₄ et R¹⁰ le méthyle ou un groupe alkyle en C₆ à C₂₂, R¹¹ un groupe alkyle en C₆ à C₂₂, Y un groupe alkylène en C₂ à C₄, n un nombre entre 1 et 100, R¹² un groupe alkyle en C₁ à C₃₀, cycloalkyle en C₅ à C₁₂ ou aryle en C₆ à C₃₀ et R¹³ un atome d'hydrogène, un groupe alkyle en C₁ à C₄, de préférence le méthyle.

9. Procédé pour la préparation des co- et terpolymères selon la revendication 1, caractérisé en ce qu'on met d'abord à réagir des monomères des formules générales J et/ou K 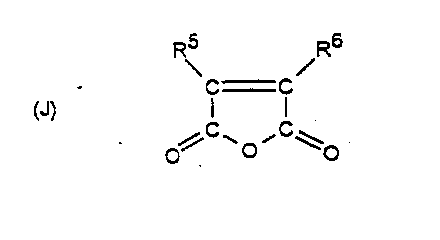 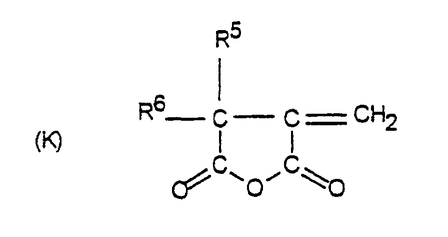 dans lesquelles R⁵ et R⁶ représentent indépendamment l'un de l'autre un atome d'hydrogène ou un groupe méthyle avec une ou plusieurs amines de formule L,
(L) NH₂R⁷
dans laquelle R⁷ représente un groupe alkyle en C₆ à C₂₄, un résidu de formule F 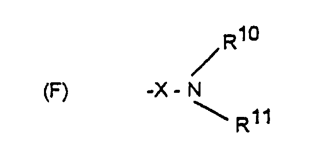 ou un résidu de formule G 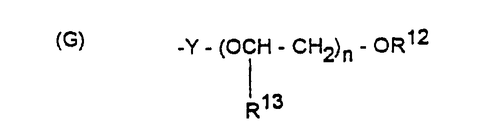 dans lesquelles X représente un groupe alkylène en C₂ à C₄, R¹⁰ le méthyle ou un groupe alkyle en C₆ à C₂₂ et R¹¹ un groupe alkyle en C₆ à C₂₂, Y un groupe alkylène en C₂ à C₄, n un nombre entre 1 et 100, R¹² un groupe alkyle en C₁ à C₃₀, cycloalkyle en C₅ à C₁₂ ou aryle en C₆ à C₃₀ et R¹³ un atome d'hydrogène, un groupe alkyle en C₁ à C₄, de préférence le méthyle et on fait polymériser ensuite le produit de réaction avec l'éthylène et éventuellement d'autres monomères de formule générale H 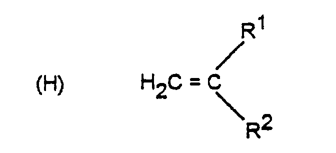 dans laquelle R¹ et R² sont différents, R¹ représente un atome d'hydrogène ou un groupe méthyle et R² un atome d'hydrogène, un groupe -COOR³ ou un groupe -OOCR⁴, dans lesquels R³ et R⁴ sont identiques ou différents et représentent un groupe alkyle en C₁ à C₁₂ linéaire ou ramifié, de préférence le méthyle ou l'éthyle.

10. Procédé selon la revendication 8 ou 9, caractérisé en ce qu'on effectue la polymérisation sous la forme de polymérisation sous haute pression en continu ou en discontinu, de préférence en continu, à une température de 100 à 350°C, de préférence de 140 à 300°C, et sous une pression de-50 à 400 MPa, de préférence de 100 à 300 MPa.

11. Procédé selon une ou plusieurs des revendications 8 à 10, caractérisé en ce qu'on met en oeuvre pour la polymérisation de 0,1 à 20% en poids, de préférence de 0,2 à 10% en poids, par rapport aux monomères, d'un amorceur de chaînes radicalaires.

12. Procédé selon une ou plusieurs des revendications 8 à 11, caractérisé en ce qu'on met en oeuvre pour la polymérisation de 0,2 à 15% en mole, de préférence de 0,5 à 10% en mole des anhydrides d'acide dicarboxylique α,β-insaturés ainsi que de 85 à 99,2% en mole, de préférence de 90 à 99,5% en mole des composés α,β-insaturés.

13. Procédé selon une ou plusieurs des revendications 8 à 12, caractérisé en ce qu'on réalise la polymérisation en présence de 0,1 à 20% en poids, par rapport à la teneur en monomères, d'un régulateur de masse moléculaire.

14. Utilisation des co- et terpolymères selon la revendication 1 comme agents d'amélioration de l'écoulement pour les huiles brutes contenant de la paraffine et en particulier pour les produits pétroliers.

15. Utilisation des co- et terpolymères selon la revendication 14, caractérisée en ce qu'on ajoute à l'huile brute contenant de la paraffine ou au produit pétrolier de 10 à 10000 ppm, de préférence de 20 à 5000 ppm et de manière particulièrement préférée de 50 à 2000 ppm du-co- ou terpolymère.

16. Huiles brutes et produits pétroliers contenant au moins un co- ou terpolymère selon la revendication 1.

17. Mélange contenant au moins un co- ou terpolymère selon la revendication 1 et au moins un copolymère éthylène-ester de vinyle, de préférence un copolymère éthylène-acétate de vinyle et en particulier un copolymère éthylène-acétate de vinyle qui contient de 10 à 40% en poids d'acétate de vinyle et de 60 à 90% en poids d'éthylène.

18. Mélanges selon la revendication 17, caractérisés en ce qu'ils contiennent les co- ou terpolymères et les copolymères éthylène-ester de vinyle dans le rapport (en parties en poids) de 20 : 1 à 1 : 20, de préférence de 10 : 1 à 1 : 10.

19. Mélanges contenant des co- ou terpolymères selon la revendication 1 et des terpolymères éthylène/acétate de vinyle/néononanoate de vinyle ou éthylène/acétate de vinyle/néodécanoate de vinyle dans le rapport (en parties en poids) de 20 : 1 à 1 : 20, de préférence de 10 : 1 à 1 : 10.

20. Mélanges selon la revendication 19, caractérisés en ce que les terpolymères éthylène/acétate de vinyle/-néononanoate de vinyle et les terpolymères éthylène/-acétate de vinyle/néodécanoate de vinyle contiennent en plus de l'éthylène de 10 à 35% en poids d'acétate de vinyle et de 1 à 25% en poids de néononanoate de vinyle ou de néodéeanoate de vinyle.

21. Mélanges contenant des co- et terpolymères selon la revendication 1 et des agents de dispersion de la paraffine dans le rapport (en parties en poids) de 1 : 10 à 20 : 1, de préférence de 1 : 1 à 10 : 1.

22. Mélanges contenant des co- et terpolymères selon la revendication 1 et des polymères en peigne dans le rapport (en parties en poids) de 1 : 10 à 20 : 1, de préférence de 1 : 1 à 10 : 1.

23. Huiles brutes et produits pétroliers contenant de la paraffine, contenant des mélanges selon une ou plusieurs des revendications 17 à 22.
